# EUROPEAN PATENT SPECIFICATION

(11) **EP 4 209 940 B1**
(45) Date of publication and mention of the grant of the patent: **11.11.2026**
(21) Application number: 21863981.3
(22) Date of filing: 27.07.2021
(51) Int. Cl.: G06F 21/31, G06T 1/00, G06V 40/10, H04N 23/00, G06F 21/32

(54) **ELECTRONIC DEVICE**
ELEKTRONISCHE VORRICHTUNG
DISPOSITIF ÉLECTRONIQUE

(30) Priority: 01.09.2020 JP 2020147050
(43) Date of publication of application: 12.07.2023
(73) Proprietor: Sony Semiconductor Solutions Corporation, Atsugi-shi, Kanagawa 243-0014 (JP); Sony Group Corporation, Tokyo 108-0075 (JP)
(72) Inventor: NAKATA Masashi, Atsugi-shi, Kanagawa 243-0014 (JP); BABA Tomohiko, Atsugi-shi, Kanagawa 243-0014 (JP); MIYATANI Yoshitaka, Atsugi-shi, Kanagawa 243-0014 (JP); NOUDO Shinichiro, Kikuchi-gun, Kumamoto 869-1102 (JP); TANIKAME Takao, Tokyo 108-0075 (JP)
(74) Representative: MFG Patentanwälte Meyer-Wildhagen Meggle-Freund Gerhard PartG mbB
(86) International application number: PCT/JP2021/027618
(87) International publication number: WO 2022/049923

(56) References cited:
- JP-A- 2018 506 806
- JP-A- 2019 512 114
- US-A1- 2017 220 842
- US-A1- 2018 306 640
- US-A1- 2018 306 640

## Description

### TECHNICAL FIELD

The present disclosure relates to an electronic device.

### BACKGROUND ART

Authentication using fingerprint information and vein information has been widely achieved. A technology for acquiring authentication information using a fingerprint sensor provided below a display has also been developed. The fingerprint sensor provided below a current display detects that the user touches the touch panel and initiates fingerprint authentication. For this reason, it takes about 500 msec to complete the authentication, and there is a high probability that this is a cause of deteriorating the user experience.

Patent Document 3 discloses a method for initiating fingerprint capture in an electronic device. The device includes a touch screen with a sensing region, a touch controller, a fingerprint controller, and a host. The device is placed in a low power doze mode where the fingerprint controller is in a low power state and the device scans for an object proximate to the sensing region. When an object is proximate to the sensing region, the device executes a validation mode to determine whether the object is a fingerprint. When a fingerprint is detected, the device sends a wake up signal to the fingerprint controller and places the fingerprint controller in a high power mode. One or more fingerprint images are then captured.

### CITATION LIST

### PATENT DOCUMENT

Patent Document 1: US 2018/0306640 A
Patent Document 2: WO 2018/176200 A
Patent Document 3: US 2017/220842 A1

### SUMMARY OF THE INVENTION

### PROBLEMS TO BE SOLVED BY THE INVENTION

An embodiment of the present disclosure provides an electronic device with improved usability using a light receiving sensor.

### SOLUTIONS TO PROBLEMS

According to a first aspect the present disclosure provides an electronic device in accordance with independent claim 1.

Further aspects are set forth in the dependent claims, the drawings, and the following description.

The electronic device includes a first sensor and a second sensor. The first sensor includes a constantly driven optical sensor. When the first sensor detects a predetermined environmental change, the second sensor is driven as an authentication mode and shifts to a mode for acquiring information of an authentication target.

A display that displays information may be further included, and the first sensor and the second sensor may be provided below the display.

The second sensor may change a resolution on the basis of a state of the environmental change.

The first sensor and the second sensor may be the same sensors, and may operate as sensors having different characteristics in a case of being used as respective sensors.

The first sensor may detect at least illuminance information as the environmental change.

The first sensor may detect at least object information (for example, information of a face, a hand, and a finger) as the environmental change.

The first sensor may detect at least distance information as the environmental change.

The first sensor may detect the distance information on the basis of parallax information acquired from an imaging element.

The first sensor may acquire the parallax information using divided pixels.

The first sensor may acquire the parallax information using an image plane phase difference pixel.

The first sensor may detect the distance information by a time of flight (ToF) sensor.

When the first sensor detects a predetermined state, the display may be caused to emit light.

When the first sensor detects a predetermined state, a display indicating an authentication region by the second sensor may be displayed on the display.

The first sensor may detect the environmental change before a target comes into contact with the display, and the second sensor may acquire information of the authentication target before the target comes into contact with the display.

The second sensor may include a memory for each pixel, and may operate as an electronic device having pixels including a global shutter.

The second sensor may include an event driven pixel.

The second sensor may acquire the authentication information in a case where a distance from the display to the target is longer than 0 millimeters and equal to or shorter than 50 millimeters.

With respect to the information acquired by the second sensor, magnitude of the authentication information may be corrected to perform authentication.

The second sensor may be a sensor having an angle of view of 20 degrees or more.

A camera disposed on the display side may be further included, and in a case where the camera is activated, the first sensor may be switched to a mode in which the first sensor operates as an illuminance sensor that outputs color-specific information.

In a case where the camera is activated, the second sensor may be switched to a mode in which the second sensor operates as an illuminance sensor that outputs color-specific information.

The illuminance sensor may output the color-specific information as statistical information.

The camera may be controlled on the basis of the color-specific information.

According to one embodiment, an electronic device includes a display, a camera, and a constantly driven sensor. The camera is disposed on the same surface as the display. The sensor is disposed below the display. In the electronic device, the sensor operates as an illuminance sensor that outputs color-specific information on the basis of a timing at which the camera is activated.

According to one embodiment, an electronic device includes a display, an authentication sensor, and a control unit. The authentication sensor is disposed below the display and acquires authentication information. The control unit switches the operation according to a plurality of different authentication targets of a user acquired by the authentication sensor.

The plurality of authentication targets may be fingerprint information of different fingers.

The control unit may switch the operation depending on whether the authentication targets of the user are a finger of a right hand or a finger of a left hand.

The control unit may switch the operation according to a fact that the authentication targets of the user are different fingers of the same hand.

The control unit may switch the operation according to a fact that the authentication targets of the user are a plurality of fingers.

The control unit may switch the operation when the authentication target of the user is a different motion of a finger.

At least one of the authentication targets may be a swipe operation.

The authentication target may be a direction of the swipe operation.

At least one of the authentication targets may be a pinch-in operation.

At least one of the authentication targets may be a pinch-out operation.

At least one of the authentication targets may be a finger rotating operation.

The authentication sensor may include a memory for each pixel, and may be an electronic device that operates using a global shutter.

The authentication sensor may be an optical sensor.

The authentication sensor may be an ultrasonic sensor.

The authentication sensor may be a capacitive sensor.

The authentication sensor may acquire the authentication information at a login timing, and the control unit may permit or reject login on the basis of the authentication information.

The authentication sensor may acquire the authentication information at a login timing to a predetermined application, and the control unit may permit or reject login to the predetermined application on the basis of the authentication information.

The control unit may switch available applications on the basis of the authentication information.

The control unit may switch a connection destination of a network on the basis of the authentication information.

The control unit may switch a connection destination of a cloud on the basis of the authentication information.

The control unit may switch a connection destination of a mobile edge computing (MEC) on the basis of the authentication information.

The control unit may switch an ID or an account used in an application on the basis of the authentication information.

The control unit may switch a plurality of operation settings on the basis of the authentication information.

At least one of the operational settings may be on and off of tethering.

At least one of the operation settings may be on and off of a silent mode.

At least one of the operation settings may be display of a wall paper.

The control unit may switch a billing destination of payment on the basis of the authentication information.

The control unit may switch and start an operating system (OS) to be started on the basis of the authentication information.

There may be a plurality of the users, and the control unit may switch the operation on the basis of the authentication information for each of the users.

The authentication information may be information of a size of a finger.

The authentication information may be face information.

The control unit may give different authorities according to the authentication information.

At least one of the authorities may be an authority related to deletion of data or modification of data.

At least one of the authorities may be an authority related to data download or data upload.

At least one of the authorities may be an authority related to execution of a program.

At least one of the authorities may be an authority related to payment.

### BRIEF DESCRIPTION OF DRAWINGS

Fig. 1 is a view schematically illustrating an example of an electronic device according to one embodiment.
Fig. 2 is a view schematically illustrating an example of the electronic device according to the one embodiment.
Fig. 3 is a block diagram schematically illustrating a configuration of the electronic device according to the one embodiment.
Fig. 4 is a flowchart illustrating an operation of the electronic device according to the one embodiment.
Fig. 5 is a diagram schematically illustrating an example of an operation of the electronic device according to the one embodiment.
Fig. 6 is a view schematically illustrating an example of an operation of the electronic device according to the one embodiment.
Fig. 7 is a view schematically illustrating an example of an operation of the electronic device according to the one embodiment.
Fig. 8 is a view schematically illustrating an example of an operation of the electronic device according to the one embodiment.
Fig. 9 is a flowchart illustrating an operation of the electronic device according to the one embodiment.
Fig. 10 is a diagram schematically illustrating a resolution of a sensor according to the one embodiment.
Fig. 11 is a diagram schematically illustrating a resolution of the sensor according to the one embodiment.
Fig. 12 is a view schematically illustrating an example of an operation of the electronic device according to the one embodiment.
Fig. 13 is a diagram schematically illustrating resolution of the sensor according to the one embodiment.
Fig. 14 is a diagram schematically illustrating resolution of the sensor according to the one embodiment.
Fig. 15 is a view schematically illustrating an example of an operation of the electronic device according to the one embodiment.
Fig. 16 is a view schematically illustrating an example of an operation of the electronic device according to the one embodiment.
Fig. 17 is a block diagram schematically illustrating a configuration of the electronic device according to the one embodiment.
Fig. 18 is a flowchart illustrating an operation of the electronic device according to the one embodiment.
Fig. 19 is a view schematically illustrating an example of an operation of the electronic device according to the one embodiment.
Fig. 20 is a view schematically illustrating an example of an operation of the electronic device according to the one embodiment.
Fig. 21 is a view schematically illustrating an example of an operation of the electronic device according to the one embodiment.
Fig. 22 is a view schematically illustrating an example of an operation of the electronic device according to the one embodiment.
Fig. 23 is a view schematically illustrating an example of an operation of the electronic device according to the one embodiment.

### MODE FOR CARRYING OUT THE INVENTION

Hereinafter, embodiments of the present disclosure will be described with reference to the drawings. The drawings are used for description, and the shape and size of the configuration of each unit in the actual device, the ratio of the size to other configurations, and the like are not necessarily as illustrated in the drawings. Furthermore, since the drawings are simplified, configurations necessary for implementation other than those illustrated in the drawings are appropriately provided.

Note that, in the following description, a signal to be processed is described as image information or imaging information, but the image information or the like is a concept in a broad sense, and is a concept including an image of one frame in a still image, a moving image, or a video. Furthermore, the expressions "larger" and "smaller" can be appropriately replaced with "equal to or more than" and "equal to or less than", respectively.

Furthermore, in a case where the same timing is described, it is not necessary to be exactly the same moment, and it is to be understood as a timing regarded as the same or a timing slightly shifted in time within a certain time range. In this expression, the range of time to some extent may be appropriately different depending on the place used. For example, the range of a certain degree of time may be approximately 10 msec and may be approximately 33 msec. The time is not limited thereto, and may be shorter or longer.

### (First Embodiment)

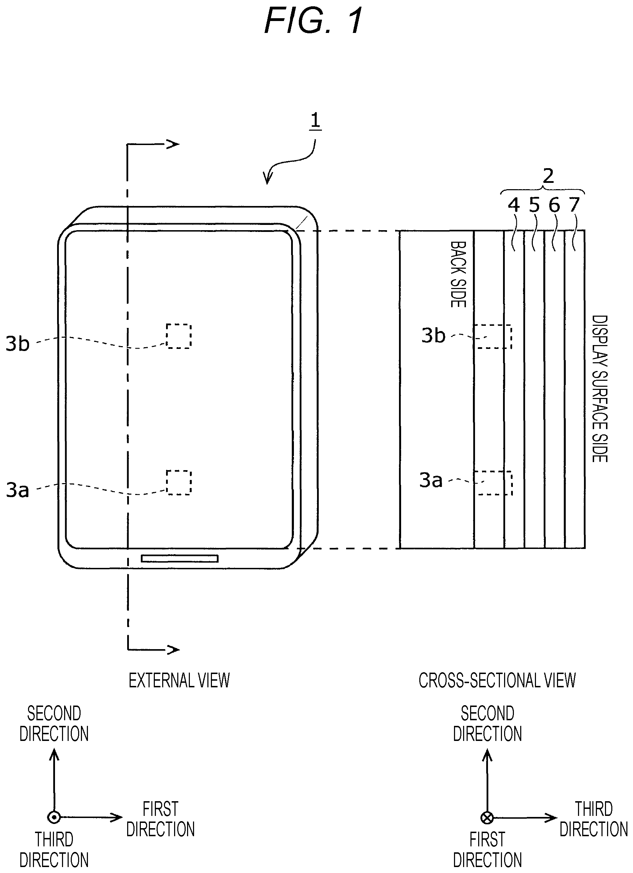

Fig. 1 is a view schematically illustrating an electronic device according to one embodiment. The electronic device 1 is, for example, any device having a display function and an image-capturing function, such as a smartphone, a mobile phone, a tablet terminal, or a computer.

The electronic device 1 includes a display unit 2, a camera module 3a, and a light receiving sensor 3b. As can be seen in a left view of Fig. 1, a display screen 1a spreads close to an outer size of the electronic device 1, and a width of a bezel 1b around the display screen 1a can be set to several mm or less, for example.

The electronic device 1 often includes a sensor such as fingerprint authentication in the bezel 1b, but in the present embodiment, as indicated by a dotted line, the electronic device 1 includes the camera module 3 in the display screen 1a. As illustrated in a right view, the width of the bezel 1b can be narrowed by providing the camera module 3a that performs image-capturing for executing authentication on a back side of the display screen 1a.

Hereinafter, in the present disclosure, this situation is expressed as that the camera module 3a (authentication sensor) is provided below the display. That is, in the present disclosure, in a case where it is described that the authentication device or the like is provided below the display, as illustrated in Fig. 1, it is indicated that a device such as a sensor or an authentication device is arranged on the side opposite to a display surface side of the display unit 2.

Furthermore, the light receiving sensor 3b is provided below the display separately from the camera module 3a. The light receiving sensor 3b is a sensor that is constantly activated, and can acquire a change in the amount of light in the surrounding environment on the display side of the electronic device 1. The light receiving sensor 3b detects, for example, a state in which the user's finger is separated from the electronic device 1, a state in which the user's face is reflected on the display unit of the electronic device 1, and the like on the basis of the intensity of the received light. Furthermore, the light receiving sensor 3b may include a distance measuring sensor. In this manner, the light receiving sensor 3b detects the user by illuminance change, face detection, distance detection, and the like.

Note that the arrangement of the camera module 3a and the light receiving sensor 3b is not limited to the example of Fig. 1, and any arrangement may be employed as long as it is provided below the display. For example, one of the camera module 3a and the light receiving sensor 3b may be disposed near a peripheral edge of the display screen 1a. In addition, in Fig. 1, both sensors are provided one by one but are not limited thereto, and a plurality of at least one of the sensors may be arranged.

Furthermore, in Fig. 1, the display unit 2, the camera module 3a, and the light receiving sensor 3b are provided on one surface of the electronic device 1, but are not limited to this. For example, the display unit 2, the camera module 3a, and the light receiving sensor 3b may be provided on both surfaces of the electronic device 1.

The display unit 2 has an appropriate structure as a display optical system. For example, as illustrated in Fig. 1, the display unit 2 is a structure in which appropriate configurations such as a display panel 4, a circularly polarizing plate 5, a touch panel 6, and a cover glass 7 are stacked. The arrangement of these components is not limited, and may be appropriately replaced, two or more of the same components may be provided, or another component may be included.

The display panel 4 may include, for example, an organic light emitting diode (OLED), a liquid crystal, a MicroLED, and a light emitting pixel array in which light emitting elements based on other display principles are arranged in an array. For example, the light emitting elements are provided in an array in a plane including a first direction and a second direction. The display panel 4 such as an OLED includes a plurality of layers. A member having low transmittance such as a color filter layer is often disposed on the display panel 4. As will be described later, in a member having a low transmittance in the display panel 4, a through hole or the like may be formed and an optical system by an appropriate material having a high transmittance may be formed in the through hole or the like according to the arrangement place of the camera module 3a. If the object light passing through the through hole is incident on the camera module 3a, the image quality of the image captured by the camera module 3a can be improved. Furthermore, the above configuration is also applicable to the light receiving sensor 3b.

The circularly polarizing plate 5 is provided for reducing glare or enhance visibility of the display screen 1a even in a bright environment, and the like. A touch sensor is incorporated in the touch panel 6. There are various types of touch sensors such as a capacitive type, a resistive film type, and a pressure-sensitive type, but any type may be used. In addition, the touch panel 6 and the display panel 4 may be integrated into a touch display. The cover glass 7 is provided to protect the display panel 4 and the like. Each of these elements may be bonded by an adhesive such as an optical adhesive film or an adhesive layer having less influence on the optical system.

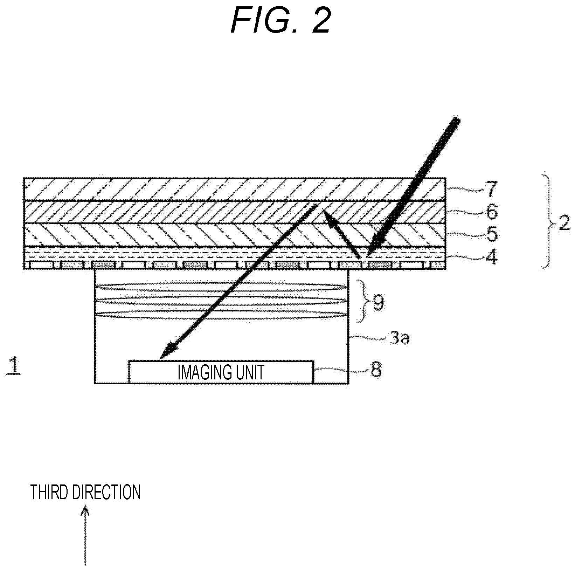

Fig. 2 is a cross-sectional view including the camera module 3a of electronic device 1 in Fig. 1. The camera module 3a includes an imaging unit 8 and an optical system 9.

The optical system 9 is disposed on the light incident surface side of the imaging unit 8, that is, on the side close to the display unit 2, and condenses light passing through the display unit 2 on the imaging unit 8. The optical system 9 may include one or more lenses. For example, the imaging unit 8 operates as an optical fingerprint sensor or an optical vein sensor, and acquires fingerprint information or vein information of the user.

Hereinafter, information that can be used for authentication and can be acquired by the camera module 3a, such as the fingerprint information, vein information, or other sweat gland information, will be referred to as the fingerprint information or the like. That is, in a case of being described as the fingerprint information or the like, the information is not limited to the fingerprint information, and represents acquiring or using information usable for appropriate authentication in a case of being described as appropriate vein information, in a case of being described as sweat gland information, and others.

The imaging unit 8 operating as an optical sensor includes a plurality of photoelectric conversion units. A lens may be disposed in each photoelectric conversion unit. This lens causes the photoelectric conversion unit constituting each light receiving pixel to receive the light appropriately emitted to the imaging unit 8 by the optical system 9.

The photoelectric conversion unit photoelectrically converts light incident through the display unit 2. The photoelectric conversion unit may be, for example, a complementary metal-oxide-semiconductor field-effect transistor (CMOS) sensor or a charge coupled device (CCD) sensor. The photoelectric conversion units may be provided in a sparse array in the first direction and the second direction, for example. For example, a light receiving element of the photoelectric conversion unit is provided as an array-like light receiving pixel along the same direction as the light emitting pixel of the display unit.

Furthermore, the photoelectric conversion unit may include a photodiode or an organic photoelectric conversion film. The plurality of photoelectric conversion units can be arrayed in any manner. The method for arraying the plurality of photoelectric conversion units may be, for example, a Bayer array, an interline array, a checkered array, or a stripe array. In addition, an appropriate array as an array of these other light receiving elements may be used.

In the present disclosure, an output value of the photoelectric conversion unit or a value subjected to predetermined conversion on the basis of the output value is referred to as a light receiving pixel value.

In the present embodiment, at the timing when the finger passes through the region where the camera module 3a of the display is present, the fingerprint information or the like of the user is acquired, and personal authentication is executed using the fingerprint information. A trigger for acquiring the fingerprint information and the like is detection of a change in a surrounding school by the light receiving sensor 3b.

The light receiving sensor 3b may basically have a similar configuration to that of the camera module 3a. For example, similarly to the camera module 3a, the light receiving sensor 3b also includes an imaging unit including a light receiving pixel array and an optical system that appropriately condenses light on the light receiving pixel or the like. The light receiving sensor 3b may be configured to be able to control the resolution at which light is received.

However, in a case where it is not necessary to accurately image-capture the fingerprint information or the like as in the camera module 3a, the camera module 3a may be customized to ensure accuracy of light receiving sensitivity. For example, the light receiving sensor 3b may be configured to detect a change in illuminance or the like with higher accuracy instead of a signal for reconstructing the light receiving pixel value into the image information.

Note that it is not limited to the mode in which the camera module 3a and the light receiving sensor 3b are independent from each other, and the camera module 3a may include operation of the light receiving sensor 3b. In this case, in order to suppress the power consumption of the camera module 3a as described later, the light receiving capability of the camera module 3a may be changed according to the surrounding environment.

As described above, the electronic device 1 reads the surrounding environment by the light receiving sensor 3b (first sensor), and determines the state of the user on the basis of the read result. Then, the electronic device 1 shifts the camera module 3a (second sensor) to the authentication mode on the basis of determination that the user's finger has approached, or the like, and drives the camera module 3a as the authentication sensor, thereby acquiring authentication information that is information of the authentication target (for example, the user's finger). Then, as illustrated in Figs. 1 and 2, the first sensor and the second sensor are disposed below a display that is a display unit of the electronic device 1.

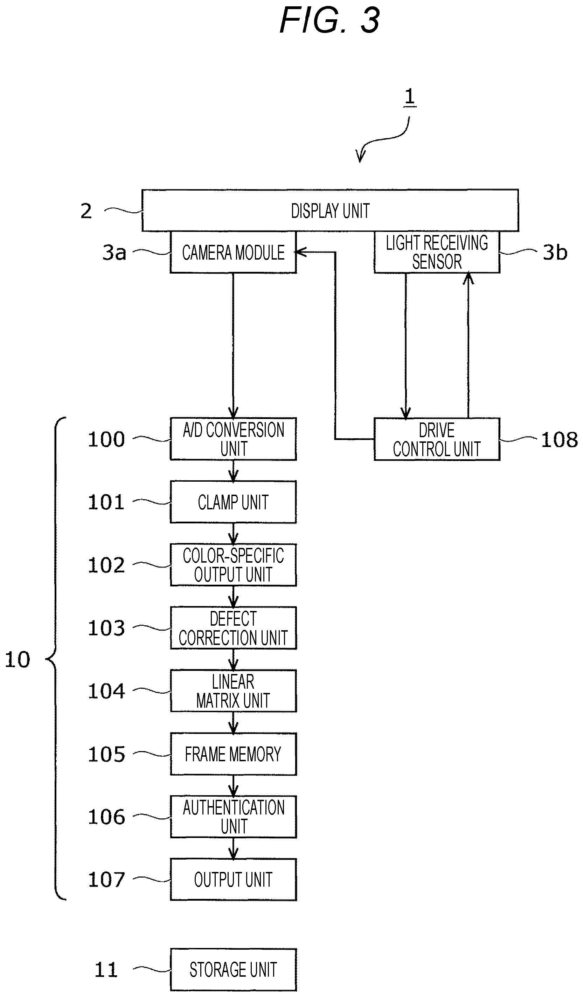

Fig. 3 is a block diagram illustrating a configuration of the electronic device 1 according to the one embodiment. The electronic device 1 further includes an information processing unit 10 and a storage unit 11 in addition to the configuration described above.

The information processing unit 10 appropriately processes the signal output from the camera module 3a. The information processing unit 10 includes, for example, a signal processing unit that appropriately converts the signal output from the camera module 3a into image information, and an image processing unit that appropriately converts the image information output from the signal processing unit into an image suitable for authentication. Note that the signal processing unit and the image processing unit do not need to be clearly separated, and for example, may execute processing related to image processing simultaneously with or in parallel with the signal processing.

For example, at least a part of the information processing unit 10 may be formed by an application specific integrated circuit (ASIC), a field programmable gate array (FPGA), or the like, and as another example, may include a general-purpose processing circuit such as a central processing unit (CPU). These circuits may be formed by analog circuits or digital circuits.

The storage unit 11 stores data for the information processing unit 10 to operate appropriately, the camera module 3a and the like to be appropriately driven, and to be appropriately displayed on the display unit 2. In a case where, at least a part of the electronic device 1 is implemented specifically by information processing by software using hardware resources, a program or the like for the information processing may be stored by the program. The storage unit 11 may include, for example, a dynamic random access memory (DRAM) and a magnetoresistive random access memory (MRAM), and may include various read only memories (ROM) as at least a part thereof.

As an example, the information processing unit 10 includes an A/D conversion unit 100, a clamp unit 101, a color-specific output unit 102, a defect correction unit 103, a linear matrix unit 104, a frame memory 105, an authentication unit 106, an output unit 107, and a drive control unit 108.

First, the configuration of the information processing unit 10 related to the camera module 3a as the second sensor will be described.

The A/D conversion unit 100 converts an analog signal based on a charge received and stored by the photoelectric conversion unit 8a into a digital signal for each light receiving pixel. The A/D conversion unit 100 outputs the converted digital signal as image data. Note that a D/A conversion unit for outputting a clock signal necessary for the operation of the A/D conversion unit 100 may be further provided.

For example, the clamp unit 101 defines a black level, subtracts the value of the black level from the image data output from the A/D conversion unit 100, and outputs the image data. The clamp unit 101 may set the ground level for each photoelectric conversion element included in the pixel. In this case, the ground correction of the image data may be executed on the basis of the ground level set for each acquired photoelectric conversion element.

For example, in a case where the photoelectric conversion unit 8a acquires the analog signal for each color, the color-specific output unit 102 outputs the image data for each color. As an example, the photoelectric conversion unit 8a includes color filters of red (R), green (G), and blue (B), or the like. With these filters and the like, each photoelectric conversion unit 8a outputs the sensed information for each color. Instead of being provided with a color filter in the photoelectric conversion unit 8a, the photoelectric conversion unit 8a may acquire the analog signal for each color by an organic photoelectric conversion film. However, in a case where the information used for authentication is sufficient with a grayscale indicated by the luminance information, the color-specific output unit 102 may not be provided.

In a case where a filter or the like is provided, the ground level may be adjusted by the clamp unit 101 on the basis of each filter. In this case, the color-specific output unit 102 may execute different ground corrections for each color and output the signal output from the clamp unit 101. Since color information is not added to the analog signal acquired by the photoelectric conversion unit 8a, the color-specific output unit 102 may store information regarding a color arranged for each light receiving element and output the analog signal for each color on the basis of this data.

Note that the photoelectric conversion unit 8a may include, for example, an element that receives near-infrared light, a filter that acquires a complex spectrum such as a plasmon filter, or the like. In these cases, although it is difficult to express them simply as color information, the color-specific output unit 102 may divide them by the wavelength of light and process the data from each pixel in association with wavelength information. In this case, the color-specific output unit 102 may execute color-specific processing as information having a frequency (wavelength) in a predetermined range.

The defect correction unit 103 corrects a defect in the image data. The defect of the image data occurs, for example, due to a pixel defect or information defect by a defect of the photoelectric conversion element provided in the pixel, or due to information loss by light saturation in the optical system 9, or the like. The defect correction unit 103 may perform defect correction processing by interpolating signal values on the basis of, for example, information of surrounding pixels or information of surrounding pixels having the same color information, or the like. Note that the defect correction unit 103 is not an essential component.

The linear matrix unit 104 performs color reproduction by performing matrix operation on the color information. For example, the linear matrix unit 104 acquires desired spectroscopy by performing an operation related to a plurality of wavelengths. In the present embodiment, for example, the linear matrix unit 104 may perform an output suitable for detecting a skin color in a case of acquiring the fingerprint information. As another example, in order to acquire biometric authentication information such as vein information, the linear matrix unit 104 may perform calculation so as to obtain an output suitable for detection of a wavelength region from yellow to red.

The frame memory 105 may be provided as a part of the storage unit 11. The frame memory 105 temporarily stores the information acquired from the photoelectric conversion unit 8a after the above-described processing is performed. For example, the information processing unit 10 performs various types of the processing described above on the fingerprint information acquired at the same timing in the frame memory 105, and finally stores the fingerprint information as one piece of image data color-reproduced by the linear matrix unit 104.

The authentication unit 106 executes personal authentication using information such as a fingerprint stored in the frame memory 105. In a case where the personal authentication is executed by the fingerprint information, the authentication unit 106 extracts a feature point in the fingerprint data, for example, and compares the extracted feature point with the authentication information stored in the storage unit 11 to thereby execute the authentication.

Furthermore, the authentication unit 106 may execute biometric authentication for impersonation prevention on the basis of not only RGB information but also, for example, light reception information of near-infrared light and information acquired via a plasmon filter. For example, the authentication unit 106 executes the biometric authentication according to whether or not information of the wavelength corresponding to the hemoglobin in the data stored in the frame memory 105 is normally acquired.

The authentication unit 106 may perform authentication by determining the feature point or the like by statistical processing after extracting the feature point or the like, or may perform authentication using a neural network model trained by machine learning as another example.

The authentication unit 106 stores, for example, the fingerprint information of a specific user acquired in advance in the storage unit 11. The personal authentication is executed on the basis of the stored user information. In the case of authenticating a plurality of users, the fingerprint information of the plurality of users is appropriately stored. In the stored fingerprint information, each image of the fingerprint information or information of a feature point acquired from each the fingerprint information may be encrypted.

The output unit 107 outputs an authentication result by the authentication unit 106. For example, the output unit 107 may start various processing circuits in order to start the display unit 2 and the like of the electronic device 1 and various types of processing on the basis of the authentication result. Other examples will be described in detail later.

Although the operation of processing the signal acquired from the camera module 3a has been described above, processing of operation of the light receiving sensor 3b, which is the first sensor, will be described next.

The light receiving sensor 3b detects a change in light on the display side, and executes various processes on the basis of a state of the environmental change.

For example, upon receiving a signal indicating that an environmental change is detected from the light receiving sensor 3b, the drive control unit 108 outputs a control signal for driving the camera module 3a. As an example, the drive control unit 108 detects that the user's finger approaches the display unit 2 of the electronic device 1 on the basis of detection of a change in the surrounding environment by the light receiving sensor 3b, and causes the camera module 3a to transition to the authentication standby state. With this transition, the camera module 3a shifts to an authentication standby state, for example, a standby state for acquiring the fingerprint information.

In this state, the camera module 3a acquires the fingerprint information and the like of the user by a predetermined operation. For example, the camera module 3a acquires the fingerprint information or the like of the user located on the imaging unit 8.

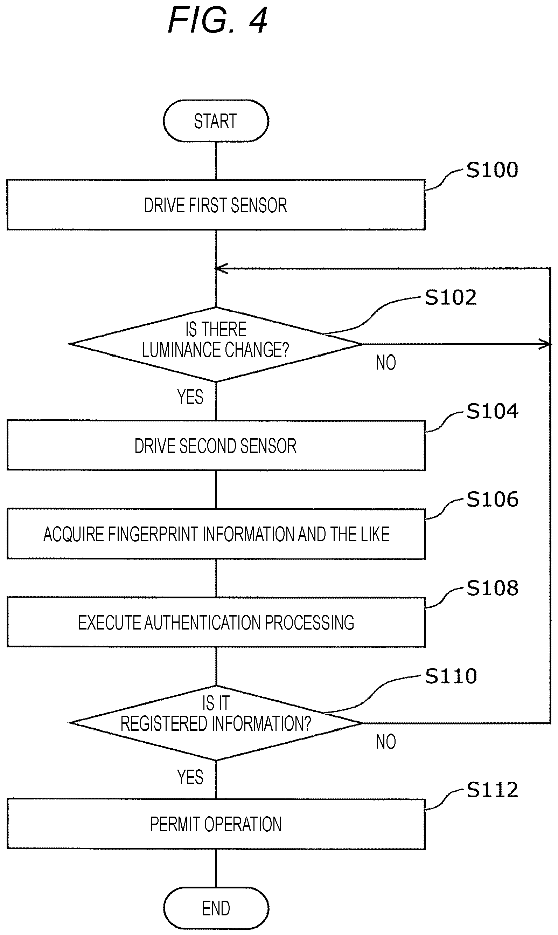

Fig. 4 is a flowchart illustrating an example of a flow of processing related to acquisition of the fingerprint information and the like of the electronic device 1 according to the one embodiment.

First, the electronic device 1 drives the light receiving sensor 3b, which is the first sensor, to be in the light receiving enabled state (S100). For example, in a state where the electronic device 1 is powered on, the light receiving sensor 3b may be continuously driven. As another example, the driving may not be performed under a predetermined situation by the user, the control unit, or the like. In principle, it is desirable that the light receiving sensor 3b continues to be driven in a state where the electronic device 1 is powered on.

Because it is driven constantly, the light receiving sensor 3b may be driven in a mode in which an additional value of signals from light receiving elements belonging to a light receiving region included in the light receiving sensor 3b is output in order to suppress power consumption of the light receiving sensor 3b. That is, the light receiving sensor 3b may be driven like having a resolution of 1 × 1 as one pixel. Since the signals from all the pixels are added, it is possible to output a signal with respect to a change in low illuminance with high accuracy even if the driving threshold is set to a high value to some extent.

Next, the drive control unit 108 determines whether or not there is a change in the light receiving state in the light receiving sensor 3b (S102). In this manner, the drive control unit 108 transitions to a state of waiting for the output from the light receiving sensor 3b. As described above, this state may be continued, for example, in a state in which the electronic device 1 is activated. In a case where the change in luminance is not detected (S102: NO), the light receiving sensor 3b and the drive control unit 108 continue the standby state.

When the light receiving sensor 3b detects a change in luminance and a signal is output to the drive control unit 108 (S102: YES), the drive control unit 108 drives the camera module 3a which is the second sensor (S104). The camera module 3a is activated to acquire the fingerprint information and the like of the user. For example, the camera module 3a shifts to a standby state for acquiring the fingerprint information or the like in contact with the cover glass 7.

Next, the information processing unit 10 acquires the fingerprint information and the like of the user on the basis of the signal information acquired by the camera module 3a (S106). For example, a signal is transmitted from the light receiving sensor 3b to the drive control unit 108 at the timing when the user brings the finger close to the display unit 2, and the drive control unit 108 transitions to a state of driving the camera module 3a to acquire the fingerprint information and the like by this signal. Then, in this state, the camera module 3a continues to transmit a signal from each light receiving pixel to the information processing unit 10. After performing various types of signal processing, the information processing unit 10 acquires the fingerprint information and the like as image data.

Next, the authentication unit 106 of the information processing unit 10 executes authentication processing by appropriately comparing and processing the fingerprint information and the like in the image data (S108). As described above, for example, a feature point such as the acquired fingerprint information is extracted and authentication is executed on the basis of the feature point, or authentication is executed by inputting image data such as the acquired fingerprint information to the trained neural network model or the like.

The authentication unit 106 executes the authentication processing using the fingerprint information and the like as described above, and determines whether or not the acquired fingerprint information and the like are registered information (S110). In a case where the acquired fingerprint information and the like do not match the registered information (S110: NO), the processing from S102 is repeated.

In a case where the acquired fingerprint information and the like match the registered information (S110: YES), a lock or the like related to the electronic device 1 is released, so as to shift to an operation permission state (S112). In this state, the user can perform an operation within the permitted range of the electronic device 1.

This flowchart illustrates a basic operation, and further complicated processing may be performed. For example, in a case where the registered information does not appear after the authentication processing is executed, the process from S102 may be repeated a predetermined number of times. In a case where a predetermined number of authentication attempts have failed, the user may be reminded to remove water from the hand, clean the display, or the like. Furthermore, as another example, in a case where the authentication fails a predetermined number of times, the processing may be such that the electronic device 1 is not be accessed for a while, or the like.

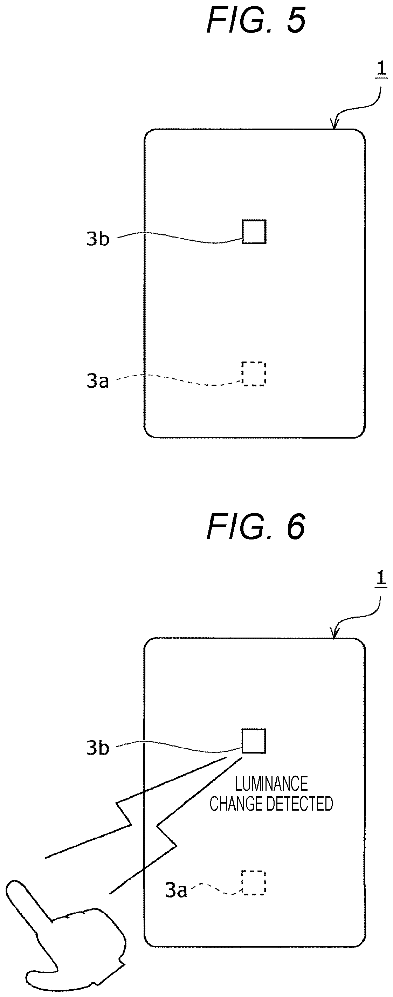

Fig. 5 is a diagram schematically illustrating a transition of the above processing. First, as illustrated in Fig. 5, the light receiving sensor 3b stands by while being driven. At this timing, the camera module 3a is not driven, and the camera module 3a is in a state of being unable to acquire information.

Fig. 6 is a diagram illustrating a state subsequent to Fig. 5 in the transition of the above-described processing. As illustrated in Fig. 6, the light receiving sensor 3b detects that the user's finger is approaching by sensing a change in luminance.

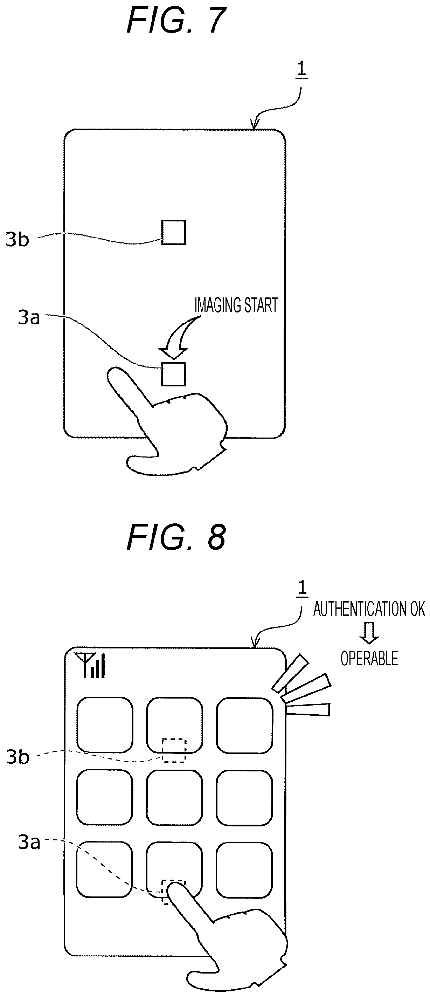

Fig. 7 is a diagram illustrating a state subsequent to Fig. 6 in the transition of the above-described processing. As illustrated in Fig. 7, when the light receiving sensor 3b detects an environmental change, the drive control unit 108 drives the camera module 3a and transitions to a state in which the fingerprint information and the like can be acquired. From this timing, the camera module 3a drives the light receiving element to output luminance information as a signal, and the information processing unit 10 generates image data on the basis of the output of the camera module 3a.

Fig. 8 is a view illustrating a state subsequent to Fig. 7 in the fiber of the above-described processing. As illustrated in Fig. 8, when the information processing unit 10 authenticates the user on the basis of the fingerprint information or the like, and determines that it is a registered fingerprint or the like, the electronic device 1 shifts to an operable state.

As described above, according to the present embodiment, the electronic device 1 can execute authentication by driving another second sensor that detects the fingerprint information or the like by using the constantly driven first sensor. By acquiring a change in the surrounding environment from a change in luminance by using the constantly driven sensor, for example, the authentication processing can be completed in a short time such as one frame (for example, approximately 33 msec) to several frames in which the user brings the finger close to the display to achieve authentication, and the user can be permitted to operate the electronic device 1.

In the above-described description, the light receiving sensor 3b is used as the first sensor, but the configuration of the first sensor is not limited thereto. For example, the first sensor may be a sensor that acquires illuminance information, a sensor that acquires information of a face, a hand, a finger, or the like, or a sensor that acquires distance information. The sensor that acquires the distance information may be a time of flight (ToF) sensor.

Furthermore, the first sensor and the second sensor are described as different sensors, but are not limited thereto. For example, the resolution of the second sensor may be set lower as compared to that in a case where the fingerprint information or the like is acquired or normal imaging is performed, and the second sensor may be constantly driven and used as the first sensor. For example, while the first sensor may be driven as a 1 × 1 pixel sensor as described above, the resolution of the second sensor that acquires the fingerprint information or the like may be reduced to drive the second sensor as a 1 × 1 pixel sensor, thereby using the second sensor as the constantly driven first sensor.

The pixel array included in the first sensor may be a sensor capable of acquiring parallax information. Furthermore, it is not limited to the pixel array, and a sensor capable of acquiring parallax information may be used as a pixel. In this case, the information processing unit 10 may detect the distance information from the acquired parallax information.

In relation to the above, the pixels included in the first sensor may include a plurality of divided pixels in one pixel, or may be pixels capable of detecting an image plane phase difference. The information processing unit 10 may detect the distance information on the basis of the parallax information or the image plane phase difference information acquired from such a pixel.

For example, 2 × 2, ..., or 5 × 5 divided pixels may be provided in one pixel, or more divided pixels may be provided. As another example, pixels having different numbers in the vertical direction and the horizontal direction, such as 2 × 3, may be provided. The parallax information may be acquired by acquiring information from different divided pixels in one pixel.

Furthermore, the pixel may include, for example, a light shielding film in which a partial region has transparency. The pixel can be formed as a pixel capable of acquiring the image plane phase difference on the basis of output signals of pixels with different positions of regions having transparency and positions of the pixels themselves. The pixel capable of acquiring the image plane phase difference may be formed in this manner.

The pixel belonging to the second sensor may have a memory in each pixel. The memory may be operated as a global shutter by transferring the charge stored in the light receiving element at the same timing. By outputting the signal as a signal from the pixel on the basis of the charge amount stored in the memory, the memory can operate as a global shutter.

By using such a global shutter configuration, it is possible to acquire image data in a state without rolling shutter distortion even in a state where the finger is moving. The acquisition of the fingerprint information and the like in the present disclosure can also be applied to capture an image in a state where a finger is moving. Even in a state where the finger is moving as described above, the second sensor can acquire the fingerprint information or the like with high authentication accuracy in which rolling shutter distortion is suppressed by using the global shutter.

Furthermore, by using the global shutter, it is possible to acquire more highly accurate the fingerprint information and the like even in a state where the finger is not in contact with the cover glass 7. For example, it is also possible to acquire the fingerprint information or the like using the global shutter and execute authentication while the finger of the user as the authentication target approaches the display, or the like.

The application related to the global shutter described above can also be substituted by using an event driven pixel. With the event driven pixel, it is possible to detect a change in luminance as an event and acquire a signal without frame processing. The fingerprint information or the like may be reconstructed on the basis of signals from pixels in which an event is detected at the same timing. Also in this case, the rolling shutter distortion can be suppressed, and the fingerprint information and the like can be acquired even in a state where the authentication target is not in contact with the cover glass 7.

If necessary, the signal output from the event driven pixel may be integrated in the time direction and acquired as the fingerprint information or the like. In a case where the signal integrated in the time direction is used as the image data, the influence of noise can also be suppressed. Note that, in a case of integration in the time direction, the image data of the authentication target may be generated on the basis of a motion of the authentication target.

As described above, the electronic device 1 according to the present embodiment can detect, with the first sensor, an environmental change by a change in a luminance value before the authentication target comes into contact, and acquire, by the second sensor, authentication information of not only the authentication target in contact with the cover glass 7 but also the authentication target before the contact with the cover glass 7. The pixel implementation may use, for example, the global shutter or the event driven pixel as described above, but may use other appropriate pixel configurations.

For example, the second sensor can acquire the fingerprint information or the like (authentication information of the authentication target) existing at a place farther than 0 mm and 50 mm or less away from the cover glass 7. In this case, for example, it is also possible to achieve non-contact authentication using the fingerprint information or the like.

In a case where image data is acquired in a non-contact state, the information processing unit 10 may execute image processing for adjusting focus on the acquired image data. In this image processing, for example, distance information or the like acquired by the first sensor may be used, or analysis may be performed by a deconvolution filter array. Furthermore, a filter may be estimated on the basis of the size of the detected authentication target, for example, the finger to acquire an image whose focus has been adjusted.

In a case where the authentication information to be imaged as the authentication target is away from the cover glass 7, the size of the image data related to the authentication information may be corrected by the distance. The correction may be performed on the basis of the distance information acquired by the first sensor. Furthermore, as another example, the information processing unit 10 may correct the size of the fingerprint information by using only the authentication information acquired by the second sensor, for example, the fingerprint information, without using the information by the first sensor. For example, the size of a reference finger may be set in advance, the image data may be enlarged or reduced so that the contour matches the size of this finger, and the fingerprint information or the like may be extracted from the image data whose size has been corrected.

As another example, in a case where the first sensor and the second sensor are combined, the angle of view of the second sensor may be set to be larger than that of a device that performs normal imaging. By setting the angle of view to be large in this manner, it is possible to expand a region where an environmental change is detected as the first sensor. For example, the angle of view may be around 20 degrees. The angle of view is not limited to this, and may be large enough to acquire information that appropriately captures environmental changes.

However, when the angle of view is too large, the second sensor often shifts to a mode for acquiring the fingerprint information or the like. Thus, as described above, the size of the angle of view should be appropriately set to, for example, 20 degrees or more with 20 degrees as a guide, or the like. The size of the angle of view may be set according to the environment and the state in which electronic device 1 is used. The environment and state are based on the place where the electronic device is used, the darkness and brightness of the place, the purpose of using the electronic device, and the like.

### (Modification)

Although the process of the electronic device 1 has been described with reference to Fig. 4 as an example, the operations of the first sensor and the second sensor according to the present embodiment are not limited to those described above. For example, in a case where the first sensor and the second sensor are the same sensor, the second sensor may change the resolution on the basis of the state of environmental change.

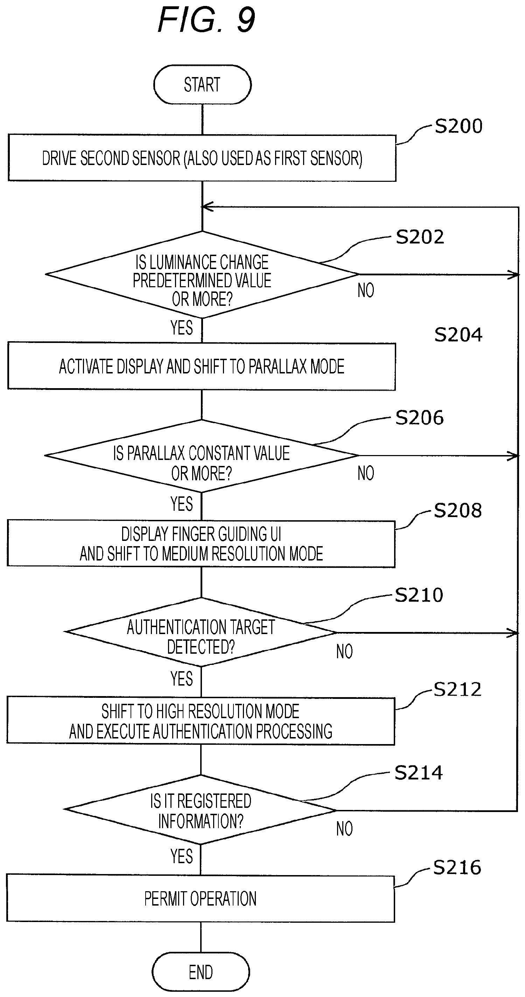

Fig. 9 is a flowchart illustrating an example of a flow of processing according to a modification.

First, the electronic device 1 brings the second sensor into a driving state and shifts the second sensor to a constant driving mode (S200). At this timing, for example, the second sensor is activated in a mode in which signals from all the pixels belonging to the light receiving region are added and output.

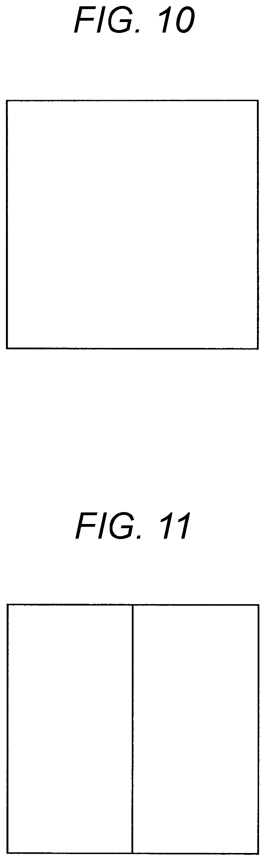

Fig. 10 is a diagram illustrating a state of a considered pixel in a case of driving as an all pixel mode. The light receiving pixels of the second sensor are collectively considered as one pixel, and a signal is detected.

Next, the information processing unit 10 calculates a change in the luminance value on the basis of the information acquired from the second sensor, and determines whether or not the calculated luminance value is equal to or more than a predetermined value (S202). For example, the predetermined value may be 10% or the like with respect to the current luminance. This 10% is given as an example and is not limited to this numerical value, and may be appropriately determined. In a case where the luminance change is not equal to or more than the predetermined value (S202: NO), the processing of S202 is repeatedly executed.

Next, in a case where the second sensor detects a luminance change equal to or more than the predetermined value (S202: YES), the drive control unit 108 activates (emits light) the display unit 2 and shifts the second sensor to a parallax detection mode (S204). Activation of the display is not essential, but the display may have been activated in this step, for example, in preparation for the next step.

For example, in a case where the surroundings are dark, by causing the display to emit light, it is possible to allow the user to grasp an approximate region where the finger is arranged on the display. Furthermore, the amount of light for detecting a finger or the like may be insufficient. In such a case, the detection of the authentication target can be facilitated by turning on the display. Similarly, there is a possibility that the authentication target becomes a shadow due to backlight or the like. Even in such a case, by causing the display to emit light, it is easy to acquire information as the authentication target.

Fig. 11 is a diagram illustrating a state of considered pixels in a case of driving in the parallax detection mode. The light receiving pixel of the second sensor is regarded as, for example, a pair of left and right two pixels, and parallax detection is executed. Note that, instead of two pixels, for example, four pixels of 2 × 2, nine pixels of 3 × 3, or the like may be used.

Furthermore, each pixel may have a pair of left and right divided pixels, and in this case, the parallax detection may be performed on the assumption that an additional value of the right divided pixel and an additional value of the left divided pixel are output values from the right pixel and the left pixel over the divided pixels.

The detection of the parallax from the pixel acquired in this manner may be executed by a general method, and thus details thereof are omitted. In Fig. 11, the pixels are divided into right and left but are not limited thereto, and the pixels may be divided into upper and lower pixels, or may be divided in two in a pixel region provided obliquely with respect to the display unit 2.

Next, the information processing unit 10 calculates the parallax on the basis of the information acquired from the second sensor, and determines whether or not the calculated parallax is equal to or more than a predetermined value (S206). The predetermined value in this step may be any value as long as it can be appropriately set. For example, a determination criterion may be set such that the distance between the authentication target and the imaging element is an appropriate distance, or equal to or shorter than 50 mm in the above-described example, or the like.

In a case where the parallax is not equal to or larger than the predetermined value (S206: NO), for example, the process from S202 may be repeated. As another example, the process of S206 may be repeated a predetermined number of times, and the process may be returned to S202 if the parallax is equal to or less than a predetermined value even after the predetermined number of repetitions. As another example, the process of S206 may be continued until the parallax becomes equal to or larger than a predetermined value or for a certain period, and in a case where the parallax is not equal to or larger than the predetermined value even after the certain period, the process may be returned to S202.

Next, in a case where the second sensor detects parallax equal to or more than the predetermined parallax (S206: YES), the drive control unit 108 displays a user interface for guiding the finger on the display, and shifts the resolution of the second sensor to a medium-resolution mode (S208). The display of the user interface is not essential, and only the resolution of the second sensor may be changed.

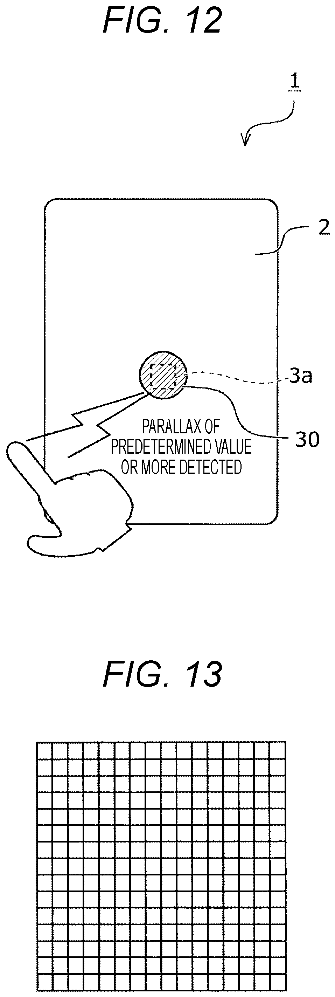

Fig. 12 is a diagram illustrating an example of a user interface for guiding a finger. As illustrated in Fig. 12, for example, a region 30 through which a finger is placed or passed is displayed on the display unit 2. On the basis of this interface, the user brings the finger into contact with the cover glass 7 or allows the finger to pass through the upper portion of the second sensor without bringing the finger into contact with the cover glass 7, and causes the second sensor to acquire the fingerprint information or the like. The shape, pattern, and the like of the region 30 are arbitrary as long as the position of the finger can be appropriately guided. For example, the region may be indicated with an arrow, or an indicator may be indicated so as to pass through the region.

Fig. 13 is a diagram illustrating a state of considered pixels in a case of driving as the medium-resolution mode. The light receiving pixel of the second sensor is set to, for example, a resolution of 1/4 or the like of the light receiving pixels belonging to the light receiving region, and is set to a state in which the authentication target, for example, the finger can be detected. At this timing, for example, it is not necessary to detect the fingerprint information or the like as the authentication information, and thus the resolution may be set to a resolution lower than 1/4, for example, 1/16 or the like. These are given as examples, and they are not limited to these numerical values.

Next, the information processing unit 10 determines whether or not the authentication target (for example, the finger) has been detected on the basis of the information acquired from the second sensor (S210). By using the pixels in the medium-resolution mode, it may be determined whether or not the authentication target has been detected from features such as a contour of the authentication target. Furthermore, the parallax can be acquired even in the medium-resolution mode, and the parallax information may also be used.

In a case where the authentication target cannot be detected (S210: NO), the operation of S210 may be repeated for a predetermined time or a predetermined scan. Then, the processing from S204 may be continued. Furthermore, the processing from S202 (S200) may be repeated instead of S204.

In a case where the authentication target can be detected (S210: YES), the drive control unit 108 shifts the second sensor to a high-resolution mode and executes the authentication processing (S212).

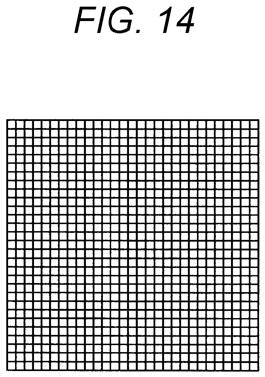

Fig. 14 is a diagram illustrating pixel elements in a case of driving as the high-resolution mode. For example, the light receiving pixels of the second sensor may be used maximally, or may be set to a high resolution to the extent that the authentication information can be appropriately acquired.

In such a high-resolution mode, the second sensor images the authentication target, and the authentication processing is executed by the information processing unit 10. This processing is similar to that of the above-described embodiment, and thus details thereof are omitted.

Next, the authentication unit 106 verifies the authentication information generated by the information processing unit 10 on the basis of the image data of the authentication target output from the second sensor, thereby determining whether or not the information is registered (S214). In a case where the information is not registered information (S214: NO), for example, the processing from S202 (or S200) is repeated. Furthermore, without being limited thereto, the operation of S214 may be repeated a predetermined number of times or a predetermined period. Thereafter, the processing from the appropriate step may be repeated.

As described above, the resolution of the light receiving pixel of the second sensor may be changed on the basis of the environment information acquired by the first sensor (also used as the second sensor). Such a change makes it possible to suppress power consumption in a case where the first sensor is also used as the second sensor.

### (Modification)

As a further modification, a camera module different from the second sensor for capturing a general image below the display may be further provided on the display unit 2 side.

In this case, when the camera is activated, the first sensor or the second sensor may be operated as an illuminance sensor that outputs color-specific information. In a case where the first sensor is used, the first sensor is not constantly driven, and may be activated in accordance with activation of the camera.

For example, in a case where an own image is acquired, it is possible to adjust exposure and adjust color temperature. This adjustment may be performed by the user on the basis of an indicator or the like displayed on the display, or may be automatically adjusted by the information processing unit 10 or the like.

The color-specific information may be output as statistical information. For example, an average value, a median value, a variation (variance), or the like may be output, or a histogram may be output. In a case where a histogram or the like is output, for example, the user may select a curve of gamma correction for each color, or gamma correction may be performed automatically for each color.

Then, the drive control unit 108 may perform control regarding imaging of the camera on the basis of the adjusted parameters such as exposure. Furthermore, parameters of image processing by the information processing unit 10 may be automatically set, and image processing such as white balance and color temperature of a captured image may be executed and output.

As described above, according to the present modification, the first sensor or the second sensor can be used as an illuminance sensor such as a camera.

### (Second Embodiment)

In the above-described embodiment and modifications, some usability improvements using a constantly driven sensor have been described, but in the present embodiment, further usability improvements using an authentication sensor will be described.

The basic configuration is similar to the configuration illustrated in Fig. 1, but the electronic device 1 according to the present embodiment may not include the light receiving sensor 3b. That is, in the present embodiment, the light receiving sensor 3b is not an essential component. Furthermore, similarly to the above-described embodiment, the camera module 3a is provided in the electronic device 1 as an authentication sensor that acquires authentication information of the authentication target, and is provided below the display.

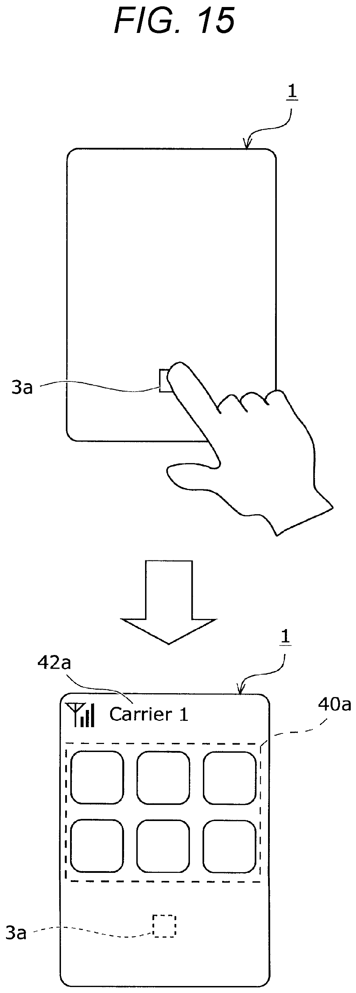

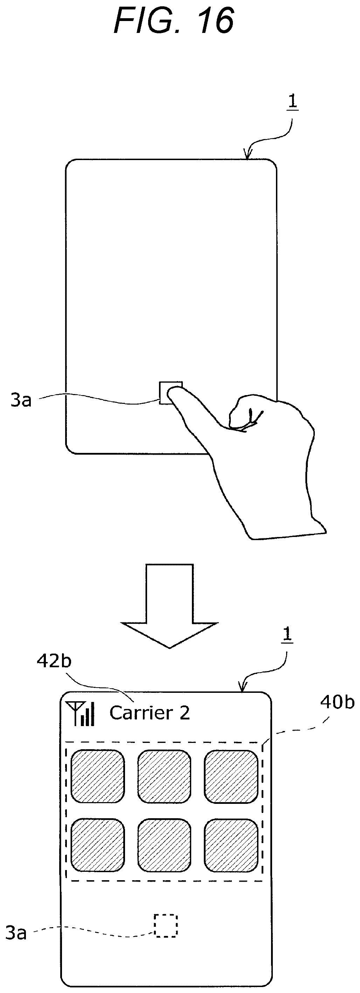

Figs. 15 and 16 are diagrams schematically illustrating typical operation of the electronic device 1 according to the present embodiment.

Fig. 15 is a diagram illustrating, for example, a result of authentication performed by the authentication unit 106 on the basis of information of the index finger of the right hand when the user causes the camera module 3a to image the index finger of the right hand. As illustrated in the lower diagram, when the authentication succeeds, a personal application 40a can be used. Furthermore, for example, it is displayed that the electronic device 1 is connected to a predetermined first carrier 42a, and the electronic device 1 is connected to the carrier 1.

Fig. 16 is a diagram illustrating, for example, a result of authentication performed by the authentication unit 106 on the basis of information regarding the thumb of the right hand when the same user as in Fig. 15 causes the camera module 3a to image the thumb of the right hand. As illustrated in the lower diagram, when the authentication succeeds, the work application 40b can be used. The work application 40b may be an application group different from the personal application 40a. Furthermore, for example, it is displayed that the electronic device 1 is connected to a predetermined second carrier 42b, and the electronic device 1 is connected to the carrier 2.

In these drawings, only a difference in display can be seen, but actually, in a case where authentication is performed for personal use, an application for business cannot be accessed, and conversely, in a case where authentication is performed for business use, an application for personal use cannot be accessed.

That is, as described above, the electronic device according to the present embodiment switches the operation depending on the authentication target for which authentication is to be executed. The authentication target may be, for example, different fingers of the same target. The different fingers may be, for example, different fingers of the same hand such as the thumb and the index finger of the right hand, or may be different fingers of different hands such as the index finger of the right hand and the index finger of the left hand. For example, a human generally has different pieces of information as 10 pieces of finger information, and 10 pieces of authentication can be achieved.

In the above description, the application for personal use and the application for work are switched, but the application is not limited thereto. The electronic device 1 may be activated in a state where a different application group can be executed for each finger. For example, a purpose may be determined for each finger, and a different application group may be set for each purpose. This application group may be applications in which some applications are common to some applications of another application group.

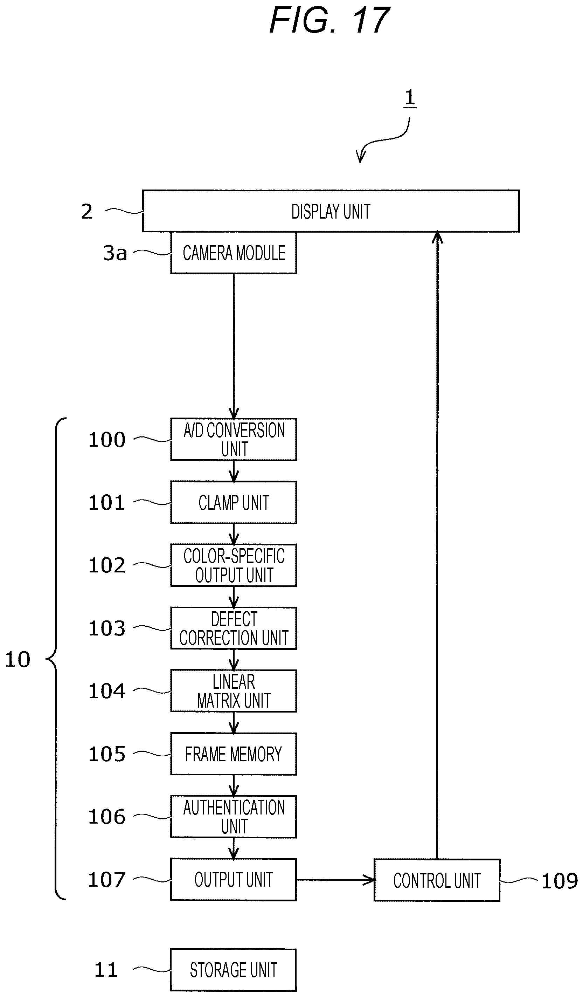

Fig. 17 is a block diagram illustrating an example of a configuration of the electronic device 1 according to the present embodiment. The electronic device 1 includes the display unit 2, the camera module 3a, and the information processing unit 10. The display unit 2 and the camera module 3a are each provided with components for appropriately executing operations, similarly to the description in the above-described embodiment.

The information processing unit 10 includes a signal processing unit, an image processing unit, and a control unit 109. The information processing unit 10 may be configured not to include the drive control unit 108 of the above-described embodiment. Note that each of the signal processing unit and the image layer processing unit is schematically illustrated, and not all the components illustrated in Fig. 17 are essential as long as authentication is appropriately executed. Furthermore, conversely, inclusion of other components for appropriately executing an operation is not excluded.

The control unit 109 controls the operation of the electronic device 1 on the basis of an authentication result in the authentication unit 106 output from the output unit 107. For example, the control unit 109 performs appropriate display on the display unit 2 to execute an operation based on the authentication result. This display is, for example, as illustrated in Figs. 15 and 16, a display such as displaying icons so that different applications can be launched or displaying connected to different carriers. Of course, the display is not limited to these displays, and appropriate display is performed according to the operation.

In this manner, the control unit 109 switches the operation depending on the authentication target that has been successfully authenticated. For switching of the operation, for example, an available application is switched or a communication carrier is switched as described above.

For example, in a case where the application is switched, the control unit 109 enables only the application associated with the login by the authentication target to operate, and disables access to other applications. For this implementation, the method is not particularly limited.

Note that, in a case where it is necessary to use another application when using a certain application, the operation of the another application may be enabled for the authentication. As another example, while allowing use of the another application from the certain application, direct use of the another application by the user may be refused.

For example, in a case where the communication carrier is switched, the control unit 109 confirms whether or not the SIM card of the communication carrier for authentication is mounted. In a case where the SIM card of the target carrier is mounted, it is connected to the designated communication carrier on the basis of the information of the SIM card. If an appropriate SIM card is not mounted on the corresponding communication carrier, a message indicating that connection cannot be established may be displayed, and the user may be allowed to log in to the electronic device 1 in a state where communication cannot be established. The SIM card may be a normal SIM card (including a micro SIM or the like), or may be an eSIM installed in the electronic device 1 in a software manner.

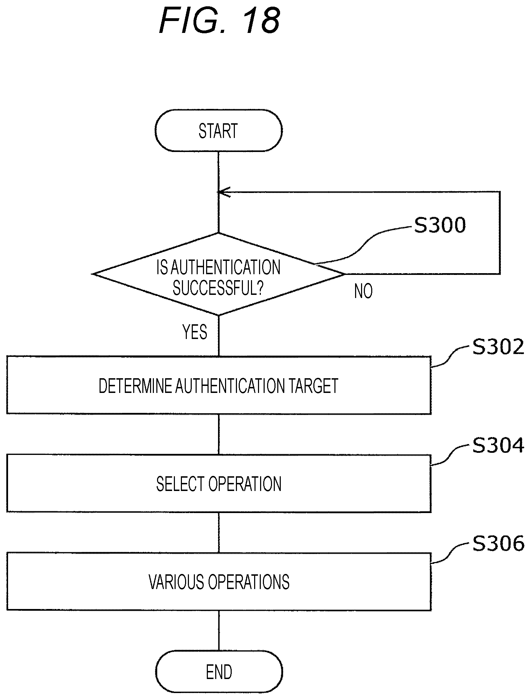

Fig. 18 is a flowchart illustrating an example of processing of the electronic device 1 according to the present embodiment. Note that each process up to the authentication is omitted.

First, the electronic device 1 executes an authentication processing and determines whether or not the authentication is successful (S300). This authentication processing may be performed by any method as long as the authentication processing is performed by an appropriate method. However, there is a plurality of pieces of authentication information for which authentication succeeds. In a case where the authentication fails (S300: NO), the state may return to the authentication standby state, or in a case where the authentication fails a predetermined number of times, the access may be denied. The access rejection may be continued for a predetermined time.

When the authentication succeeds (S300: YES), the control unit 109 determines the authentication target (S302).

Next, the control unit 109 selects and determines an operation on the basis of the determined authentication target (S304). For example, the operation to be permitted is determined by storing the authentication target and the permitted operation in association with each other in the storage unit 11, and extracting the operation corresponding to the authentication target. This storage may be stored as, for example, data indicating a profile corresponding to each authentication target.

For this selection, in a case where the authentication is successful, the authentication unit 106 may convert the successful authentication target into, for example, a uniquely set identifier or the like, and output the identifier or the like to the control unit 109 via the output unit 107. The control unit 109 may extract operation information stored in the storage unit 11 on the basis of the identifier. This identifier may be, for example, plain text or may be obfuscated with a hash value or the like.

The storage unit 11 may hold an operation, an environment, and the like permitted for the authentication target as a database. The control unit 109 may connect to the database using the identifier as a key to acquire information regarding permission operation, environment, and the like.

Next, the control unit 109 executes various operations on the basis of the acquired information of the operation, environment, and the like (S306).

As described above, according to the present embodiment, even in a case of the same user, it is possible to distribute the operation according to an identification target. By employing such a form, for example, as described above, the user can switch between a profile for business use and a profile for personal use by changing the authentication finger in the same terminal.

Hereinafter, various implementation examples of the present embodiment will be described. In the following implementation example, while some authentication targets and authentication operations are illustrated, and for these targets and operations, for example, information used for collation may be acquired by registering targets, operations, and the like in advance. These pieces of information are stored in the storage unit 11, for example, and the authentication is executed by using the stored information.

### (Implementation Example 1)

As described above, the operation may be switched with the authentication target as a different finger. Finger information may be fingerprint information, vein information, sweat gland information, or contour information. In addition, the information may be information obtained by combining these pieces of information. In this manner, the authentication target may be any object as long as the authentication can be appropriately executed. In addition, the authentication target only needs to have information different from the other authentication targets and to allow uniquely determining which authentication target it is.

As described above, in a case where the authentication target is a finger, the authentication target may be either a finger of a different hand or a different finger of the same hand. In general, the fingerprint information, the vein information, and the like are different for each finger even for the same person, and thus can be the authentication target of the present embodiment. Furthermore, although one camera module 3a is illustrated, in a case where a plurality of fingers or the like is the authentication target, a plurality of the camera modules 3a may be provided, or as another example, the camera module 3a that occupies a larger area may be provided.

### (Implementation Example 2)

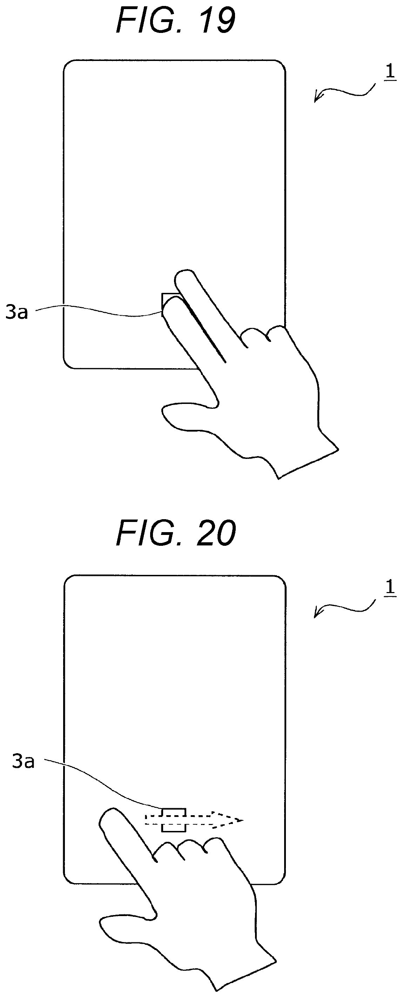

Fig. 19 is a diagram illustrating another implementation example of another authentication target. As illustrated in Fig. 19, the authentication target may be a combination of a plurality of fingers. The authentication target may be, for example, an index finger as illustrated in Fig. 15 and a combination of the index finger and the middle finger as illustrated in Fig. 19. In a case where a plurality of fingers is the authentication target, information may be acquired at the same timing as illustrated in Fig. 19, or authentication information of different objects may be continuously acquired.

For example, as illustrated in Fig. 19, by combining a plurality of fingers and causing the camera module 3a to read the fingers, the authentication information can be the authentication information of one authentication target.

As another example, as illustrated in Figs. 15 and 16, the index finger and the thumb may be separately read at consecutive timings to obtain one piece of authentication information. In this case, it may be configured such that the authentication is successful when the authentication of the thumb is performed within a predetermined time from the authentication using the index finger. Furthermore, different authentication information may be determined depending on the order of the index finger and the thumb and the order of the thumb and the index finger, or the same authentication information may be determined in any order.

As described above, a plurality of fingers can be used as the authentication target. For example, by performing such authentication, it is possible to perform authentication for work operation with a plurality of fingers and perform authentication for personal operation with a single finger. Thus, by selectively using a plurality of fingers and a single finger, it is possible to make the user more aware of the purpose of starting.

### (Implementation Example 3)

In the above description, it is assumed that the authentication target is a different finger (object), but the present implementation example is an implementation example of the electronic device 1 in which the authentication target is a motion (operation) of a different finger.

Fig. 20 is a diagram illustrating operation switching according to the present implementation example. As illustrated in Fig. 20, the process of the electronic device 1 may be switched by a swipe operation. For example, the operation may be switched between a case where the authentication is performed by fixing a finger on the camera module 3a and a case where the authentication is performed by a swipe operation.

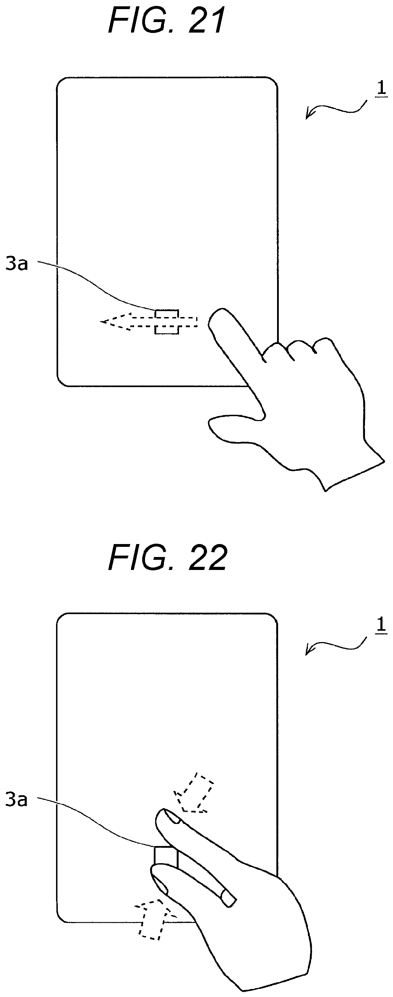

Fig. 21 is a diagram illustrating another example of operation switching according to the present implementation example. For example, the authentication unit 106 may acquire the fingerprint information or the like, and may acquire information of the direction in which the finger is moving.

For example, the control unit 109 can switch the processing of the electronic device 1 so that different operations are performed in a case where the index finger is swiped to the right on the camera module 3a as illustrated in Fig. 20, and in a case where the index finger is swiped to the left on the camera module 3a as illustrated in Fig. 21.

The direction of the motion of the swipe operation may be detected together with the acquisition of the authentication information by the camera module 3a, for example. As another example, the direction of the swipe may be acquired on the basis of sensing information of the touch panel provided below the display. In this case, the authentication information such as the fingerprint information is acquired by the camera module 3a.

Note that, instead of a similar contact with the cover glass 7 like swiping, the contact state may be gradually released from the contact state as in a flick operation.

### (Implementation Example 4)

An example of the operation is not limited to the swipe operation.

Fig. 22 is a diagram illustrating switching of operation according to the present example. For example, the authentication unit 106 may acquire the fingerprint information or the like and determine the operation of pinch-in. Similarly to the above, the pinch-in operation may be determined by the touch panel.

In this case, the authentication information may be acquired by at least one of the fingers passing through the camera module 3a and stopping, or the authentication information of both the fingers may be acquired.

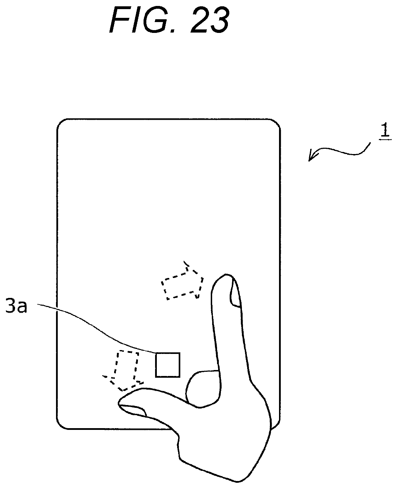

Fig. 23 is a diagram illustrating another example of operation switching according to the present embodiment. As described above, the electronic device 1 may recognize the pinch-out operation and separate the processing by the pinch-out operation.

Furthermore, the operation may be an operation of rotating these fingers. The rotating operation may be a single finger or a plurality of fingers. In the case of the single finger, for example, the finger may be rotated so as to draw a curve around a predetermined point. In the case of the plurality of fingers, for example, the plurality of fingers may be rotated so as to draw a curve around a predetermined point.

The motion of the finger described above has been described as a separate implementation example, but the control unit 109 may execute the control of the electronic device 1 so as to perform different operations by these movements. For example, different operations may be executed depending on the authentication target that is not moving, the authentication target of the swipe operation, and the authentication target of the pinch-in operation.

### (Implementation Example 5)

In the above description, the authentication target and the authentication operation have been described. Next, some implementation examples of the authentication sensor will be described.

As described in the above embodiment, the camera module 3a operable as the authentication sensor may cause the light receiving element to perform the global shutter operation. That is, the camera module 3a includes a memory for each light receiving pixel, and converts the intensity of the received light into an electric charge or the like at the same timing. A memory that stores the electric charge and the like may be provided, and an analog signal based on information of the stored electric charge and the like may be output at any timing.

Similarly to the above-described embodiment, by operating as the global shutter in this manner, it is possible to suppress rolling shutter distortion that may occur in the light receiving pixel.

### (Implementation Example 6)

In the above description, the authentication sensor that acquires the authentication information is an optical sensor, but the authentication sensor is not limited thereto.

For example, as the authentication sensor that acquires the authentication information, the electronic device 1 may include an ultrasonic sensor instead of the camera module 3a.

For example, the electronic device 1 may include a capacitive sensor as the authentication sensor that acquires the authentication information. The capacitive sensor may use the touch panel 6 or may further include an authentication sensor below the display.

Furthermore, the capacitive sensor can be replaced with a pressure-sensitive sensor as long as appropriate processing can be performed.

As described above, various sensors can be used as the authentication sensor that acquires the authentication information from the authentication target. An appropriate sensor can be provided on the basis of the aspect of the electronic device 1 and the environment to be used.

### (Implementation Example 7)

Next, some implementation examples of the operation controlled by the control unit 109 will be described.

The control unit 109 may perform an operation of permitting or denying login on the basis of the output of the authentication sensor. In this case, at least in the electronic device 1 in which the authentication sensor is activated, the authentication sensor acquires the authentication information at a login timing.

### (Implementation Example 8)

As described above, in the implementation example in which the login profile of the electronic device 1 is switched, the login of the application can be switched.

For example, the authentication sensor is activated at a login timing of a predetermined application, and permission and rejection of login to the application can be switched on the basis of an authentication result.

Moreover, the login information of the application may be switched according to different authentication targets for which authentication sensors are different. For example, in a case where the login authentication of the application is executed with the index finger (first authentication target), when the authentication is successful, the login is performed with the first account. On the other hand, in a case where the login authentication of the same application is executed with the thumb (second authentication target), in a case where the authentication is successful, login is performed with a second account different from the first account.

In this manner, instead of controlling the login of the electronic device 1 itself, the login of the application executed in the electronic device 1 may be controlled. In this case, not only permission and rejection of login but also an operation of switching the account to be logged in and the ID by different authentication targets may be performed for each application.

Although different fingers are used as the authentication target, as described above, different motions of the same finger may be set as the authentication target, and each of the same motion/different motions of different fingers, a single finger, a plurality of fingers, and the like may be set as the authentication target.

### (Implementation Example 9)

Of course, as described above, under the control of the control unit 109, the user may log in to the electronic device 1 so that the application that can be used differs depending on the authentication target. For example, in a case where the authentication succeeds in the first authentication target, the operation permission of the application belonging to the first application group may be given. On the other hand, in a case where the authentication succeeds in the second authentication target, the operation permission of the application belonging to the second application group may be given.

At least one of the applications belonging to the first application group and the second application group may be a common application.

### (Implementation Example 10)

Furthermore, the control unit 109 may switch the connection destination of the network depending on the authentication target. In the above description, as an example, the connection is made by different carriers, but is not limited thereto.

For example, in a space in which multiple local area networks (LANs) exists, the LAN to be connected may be switched by the authentication target. For example, the control unit 109 may perform control to connect to a first LAN when the authentication succeeds in the first authentication target, and connect to a second LAN when the authentication succeeds in the second authentication target.

The connection destination may be switched, and the available application group may be switched as described above.

### (Implementation Example 11)

Although the example of the LAN has been described above, the connection destination is not limited thereto. For example, the control unit 109 may switch a connection destination of a cloud depending on the authentication target.

For example, it is assumed that there are multiple connectable clouds. For example, the control unit 109 may perform control to connect to a first cloud when the authentication succeeds in the first authentication target, and connect to a second cloud when the authentication succeeds in the second authentication target.

### (Implementation Example 12)

Further, the MEC (Mobile Edge Computing) may be used instead of the cloud. Similarly, the control unit 109 may perform control to connect to the first MEC when the authentication succeeds in the first authentication target, and connect to the second MEC when the authentication succeeds in the second authentication target.

These connection destinations may be automatically switched by the control unit 109 when the authentication sensor detects the authentication target at the timing when the user logs in to the electronic device 1. As another example, switching may be performed by the control unit 109 when the authentication sensor detects the authentication target while the user is already logged in to the electronic device 1. In this case, the implementation may be such that the user can switch the network or the like at any timing.

Furthermore, the connection destinations described above are not independent from each other, and can be appropriately selected depending on the authentication target. For example, in a case of selecting a network, switching of a type of a network to be used such as a carrier, a LAN, and Wi-Fi (registered trademark) may be executed. These network settings can be set by the user. In addition, depending on the network to be used, information necessary for connection such as an ID and a password for using the network may be automatically set by performing the authentication operation.

### (Implementation Example 13)

Although the login profile, login of the application, and switching of various connection destinations have been described, it is also possible to switch other various operation settings depending on the authentication target.

For example, the control unit 109 can switch on and off of tethering depending on the authentication target. Furthermore, depending on the authentication target, the control unit 109 may switch a terminal permitted to be connected to the electronic device 1 by tethering.

### (Implementation Example 14)

The switching operation may be on and off setting of a silent mode. That is, the control unit 109 may turn on or off the silent mode depending on the authentication target. Similarly, volume setting and vibration setting may be controlled by the control unit 109 on the basis of the authentication target.

### (Implementation Example 15)

In a case where the electronic device 1 is a device capable of making a phone call, such as a smartphone, an operation of making a phone call by the authentication target may be performed. In this case, the communication destination may be set to be automatically input depending on the authentication target.

Similarly, in a case where the electronic device 1 is a device capable of transmitting and receiving a mail, an operation of creating a mail by the authentication target may be performed. In this case, depending on the authentication target, an operation of opening a mail creation screen in a state where the destination of the mail is input may be performed.

In this manner, the control unit 109 may start a predetermined application depending on the authentication target. Moreover, the control unit 109 may perform control such that some input or the like is automatically performed for the predetermined application depending on the authentication target.

### (Implementation Example 16)

As another example, the control unit 109 may perform control to change the display of the electronic device 1 depending on the authentication target. For example, the control unit 109 may display a wallpaper or change the wallpaper to be displayed depending on the authentication target.

As described above, the control unit 109 may switch the operation of the electronic device 1 and the operation of the application executed in the electronic device 1 depending on the authentication target. The above description has been given as some examples, and the control unit 109 can perform control to switch the operation of various electronic devices 1 itself and the operation of applications depending on the authentication target.

### (Implementation Example 17)

In a case where the electronic device 1 is a device such as a smartphone, the electronic device 1 may be sold and bought via a communication line such as the Internet. In such a case, the control unit 109 may execute payment by the authentication target.

In a case where there is a plurality of payment methods, the control unit 109 may switch the payment method depending on the authentication target. The control unit 109 can switch a payment method such as a credit card or electronic money, for example. In this case, the control unit 109 can switch the billing destination of the payment by switching the payment method.

### (Implementation Example 18)

Authentication can also be performed when the electronic device 1 is activated.

For example, at the timing when the electronic device 1 is in the standby state, a process of switching the operating system (OS) may be executed by authenticating the authentication target by the authentication sensor. That is, the control unit 109 may execute control of a boot loader or the like, for example. The control unit 109 can set the OS to be used in the electronic device 1 by selecting the OS to be activated by the authentication target, setting the OS in the boot loader or the like, and restarting the electronic device 1.

As another example, in a state where the electronic device 1 is not activated, the information processing unit 10 may be activated in a low power mode, and the control unit 109 may select the OS to be activated and activate the electronic device 1 on the basis of the determination of the authentication target by the authentication unit 106.

### (Implementation Example 19)

In each of the above implementation examples, the case where the same user has different authentication targets has been described, but it is not limited thereto. For example, it is also possible to achieve the switching of the control as described above by authenticating different users with respective authentication targets.

Each user naturally has different authentication information such as the fingerprint information. Therefore, the control unit 109 can also set a different operation for each user by controlling the electronic device 1 to perform different operations on the basis of the authentication information.

The user may be, for example, a parent and a child, and in this case, information such as the contour of the finger may be read by the authentication sensor, and in a case where the child executes the authentication operation, the child may log in to the electronic device 1 in a state where the function is limited as compared with the case of the parent.

In the case of determining parent-child, information may be stored in the storage unit 11 in advance.

In addition, parent and child discrimination may be performed on the basis of the size of the contour of the finger and a pitch of the fingerprint. In a case of such use, for example, while the user is executing the electronic device 1, the authentication unit 106 may execute authentication at the timing when the finger passes through the touch panel 6 on the authentication sensor by the authentication sensor to determine whether the user is a parent or a child, and the control unit 109 may perform control on the basis of the result.

In this manner, the control unit 109 can give different authorities to the user. For example, in a case where the user browses a web site or the like, in a case where the user is a child, predetermined filtering may be executed to determine whether or not access is allowed for each web site.

The control unit 109 may control each authority for uploading data from the electronic device 1 or downloading data to the electronic device 1 on the basis of the authentication target. Similarly, the control unit 109 may give authority to each of deletion of data and modification of data stored in the electronic device 1 to the authentication target.

As described above, the control unit 109 can also control permission of deletion, addition, modification, and the like of data stored in the electronic device 1 or data to be stored in the electronic device 1 for each authentication target.

These authorities may be, for example, authorities related to available programs (applications). As another example, the authority to make a payment may be used. That is, the control unit 109 can perform control to grant or remove the authority related to the application depending on the authentication target, and to permit or deny payment.

### (Implementation Example 20)

In each of the above implementation examples, the authentication is determined by a fingerprint, a vein, a motion of a finger, or the like, but the authentication is not limited thereto.

For example, the authentication sensor may be a camera that acquires a face image. The authentication unit 106 may acquire the authentication information on the basis of the face image. The authentication target may be different faces (that is, different users) or different facial expressions of the same user. In addition, the operation such as shaking the head vertically or horizontally and detected face information may be used together as the authentication target.

In this manner, the authentication unit 106 determines information that can be used as personal authentication other than the finger, and thereby the control unit 109 can execute control related to the electronic device 1.

As described above, according to the present embodiment, various controls can be executed on various authentication targets. Consequently, usability of the electronic device 1 can be improved. Furthermore, as described above, since various authorities can be controlled, security can be improved.

### REFERENCE SIGNS LIST

- 1: Electronic device
- 2: Display unit
- 3a: Camera module
- 3b: Light receiving sensor
- 4: Display panel
- 5: Circularly polarizing plate
- 6: Touch panel
- 7: Cover glass
- 8: Imaging unit
- 8a: Photoelectric conversion unit
- 9: Optical system
- 10: Information processing unit
- 100: A/D conversion unit
- 101: Clamp unit
- 102: Color-specific output unit
- 103: Defect correction unit
- 104: Linear matrix unit
- 105: Frame memory
- 106: Authentication unit
- 107: Output unit
- 108: Drive control unit
- 109: Control unit
- 11: Storage unit

## Claims

1. An electronic device (1), comprising:
a first sensor (3b) including a constantly driven optical sensor;
a second sensor (3a) configured to, when the first sensor (3b) detects a predetermined environmental change, be shifted to an authentication mode and to be driven to acquire authentication information of an authentication target; and
a display (2) configured to display information, wherein
the first sensor (3b) and the second sensor (3a) are provided below the display (2), wherein
the first sensor (3b) is configured to detect distance information as the environmental change.

2. The electronic device (1) according to claim 1, wherein
the second sensor (3a) is configured to change a resolution on a basis of a state of the environmental change.

3. The electronic device (1) according to claim 1 or 2, wherein
the first sensor (3b) and the second sensor (3a) are same sensors, and configured to operate as sensors having different characteristics in a case of being used as respective sensors.

4. The electronic device (1) according to any one of the claims 1 to 3, wherein
the first sensor (3b) is configured to detect the distance information on a basis of parallax information acquired from an imaging element (8).

5. The electronic device (1) according to claim 4, wherein
the first sensor (3b) is configured to acquire the parallax information using a divided pixel or an image plane phase difference pixel.

6. The electronic device (1) according to any one of the claims 1 to 3, wherein
the first sensor (3b) is configured to detect the distance information by a time of flight sensor.

7. The electronic device (1) according to any one of claims 1 to 6, wherein
when the first sensor (3b) detects a predetermined state, the display (2) is caused to emit light.

8. The electronic device (1) according to any one of claims 1 to 7, wherein
when the first sensor (3b) detects a predetermined state, a display indicating an authentication region by the second sensor is displayed on the display (2).

9. The electronic device (1) according to any one of claim 1 to 8, wherein
the first sensor (3b) is configured to detect the environmental change before a target comes into contact with the display, and
the second sensor (3a) is configured to acquire information of the authentication target before the authentication target comes into contact with the display (2).

10. The electronic device (1) according to claim 9, wherein
the second sensor (3a) includes a memory (105) for each pixel and is configured to operate as a global shutter, and/or wherein
the second sensor (3a) includes an event driven pixel.

11. The electronic device (1) according to claim 9 or 10, wherein
the second sensor (3a) is configured to acquire the authentication information in a case where a distance from the display (2) to the authentication target is longer than 0 millimeters and equal to or shorter than 50 millimeters.

## Patentansprüche

1. Elektronische Vorrichtung (1), umfassend:
einen ersten Sensor (3b), der einen konstant angetriebenen optischen Sensor einschließt;
einen zweiten Sensor (3a), der konfiguriert ist, um, wenn der erste Sensor (3b) eine vorbestimmte Umgebungsänderung erkennt, in einen Authentifizierungsmodus versetzt zu werden und um angesteuert zu werden, um Authentifizierungsinformationen eines Authentifizierungsziels zu erfassen; und
eine Anzeige (2), die konfiguriert ist, um Informationen anzuzeigen, wobei
der erste Sensor (3b) und der zweite Sensor (3a) unter der Anzeige (2) bereitgestellt sind, wobei
der erste Sensor (3b) konfiguriert ist, um Abstandsinformationen als die Umgebungsänderung zu erkennen.

2. Elektronische Vorrichtung (1) nach Anspruch 1, wobei
der zweite Sensor (3a) konfiguriert ist, um eine Auflösung auf einer Basis eines Zustands der Umgebungsänderung zu ändern.

3. Elektronische Vorrichtung (1) nach Anspruch 1 oder 2, wobei
der erste Sensor (3b) und der zweite Sensor (3a) gleiche Sensoren und konfiguriert sind, um in einem Fall eines Verwendetwerdens als jeweilige Sensoren als Sensoren zu arbeiten, die unterschiedliche Eigenschaften aufweisen.

4. Elektronische Vorrichtung (1) nach einem der Ansprüche 1 bis 3, wobei
der erste Sensor (3b) konfiguriert ist, um die Abstandsinformationen auf einer Basis von Parallaxeninformationen zu erkennen, die von einem Abbildungselement (8) erfasst werden.

5. Elektronische Vorrichtung (1) nach Anspruch 4, wobei
der erste Sensor (3b) konfiguriert ist, um die Parallaxeninformationen unter Verwendung eines geteilten Pixels oder eines Bildebenenphasendifferenzpixels zu erfassen.

6. Elektronische Vorrichtung (1) nach einem der Ansprüche 1 bis 3, wobei
der erste Sensor (3b) konfiguriert ist, um die Abstandsinformation durch einen Laufzeitsensor zu erkennen.

7. Elektronische Vorrichtung (1) nach einem der Ansprüche 1 bis 6, wobei,
wenn der erste Sensor (3b) einen vorbestimmten Zustand erkennt, die Anzeige (2) veranlasst wird, Licht abzugeben.

8. Elektronische Vorrichtung (1) nach einem der Ansprüche 1 bis 7, wobei,
wenn der erste Sensor (3b) einen vorbestimmten Zustand erkennt, eine Anzeige, die einen Authentifizierungsbereich durch den zweiten Sensor angibt, auf der Anzeige (2) angezeigt wird.

9. Elektronische Vorrichtung (1) nach einem der Ansprüche 1 bis 8, wobei
der erste Sensor (3b) konfiguriert ist, um die Umgebungsänderung zu erkennen, bevor ein Ziel mit der Anzeige in Berührung kommt, und
der zweite Sensor (3a) konfiguriert ist, um Informationen des Authentifizierungsziels zu erfassen, bevor das Authentifizierungsziel mit der Anzeige (2) in Berührung kommt.

10. Elektronische Vorrichtung (1) nach Anspruch 9, wobei
der zweite Sensor (3a) einen Speicher (105) für jedes Pixel einschließt und konfiguriert ist, um als ein Global Shutter zu arbeiten, und/oder wobei
der zweite Sensor (3a) ein ereignisgesteuertes Pixel einschließt.

11. Elektronische Vorrichtung (1) nach Anspruch 9 oder 10, wobei
der zweite Sensor (3a) konfiguriert ist, um die Authentifizierungsinformationen in einem Fall zu erfassen, in dem ein Abstand von der Anzeige (2) zu dem Authentifizierungsziel länger als 0 Millimeter und gleich oder kleiner als 50 Millimeter ist.

## Revendications

1. Dispositif électronique (1), comprenant :
un premier capteur (3b) comportant un capteur optique piloté constamment ;
un second capteur (3a) configuré pour, lorsque le premier capteur (3b) détecte un changement environnemental prédéterminé, être déplacé vers un mode d'authentification et pour être piloté pour acquérir des informations d'authentification d'une cible d'authentification ; et
un affichage (2) configuré pour afficher des informations, dans lequel
le premier capteur (3b) et le second capteur (3a) sont fournis en dessous de l'affichage (2), dans lequel
le premier capteur (3b) est configuré pour détecter des informations de distance en guise de changement environnemental.

2. Dispositif électronique (1) selon la revendication 1, dans lequel
le second capteur (3a) est configuré pour changer une résolution en fonction d'un état du changement environnemental.

3. Dispositif électronique (1) selon la revendication 1 ou 2, dans lequel
le premier capteur (3b) et le second capteur (3a) sont les mêmes capteurs, et sont configurés pour fonctionner en tant que capteurs ayant des caractéristiques différentes dans un cas où ils sont utilisés en tant que capteurs respectifs.

4. Dispositif électronique (1) selon l'une quelconque des revendications 1 à 3, dans lequel
le premier capteur (3b) est configuré pour détecter les informations de distance en fonction d'informations de parallaxe acquises auprès d'un élément d'imagerie (8).

5. Dispositif électronique (1) selon la revendication 4, dans lequel
le premier capteur (3b) est configuré pour acquérir les informations de parallaxe à l'aide d'un pixel divisé ou d'un pixel de différence de phase de plan d'image.

6. Dispositif électronique (1) selon l'une quelconque des revendications 1 à 3, dans lequel
le premier capteur (3b) est configuré pour détecter les informations de distance par un capteur de temps de vol.

7. Dispositif électronique (1) selon l'une quelconque des revendications 1 à 6, dans lequel
lorsque le premier capteur (3b) détecte un état prédéterminé, l'affichage (2) est amené à émettre de la lumière.

8. Dispositif électronique (1) selon l'une quelconque des revendications 1 à 7, dans lequel
lorsque le premier capteur (3b) détecte un état prédéterminé, un affichage indiquant une région d'authentification par le second capteur est affiché sur l'affichage (2).

9. Dispositif électronique (1) selon l'une quelconque des revendications 1 à 8, dans lequel
le premier capteur (3b) est configuré pour détecter le changement environnemental avant qu'une cible ne vienne en contact avec l'affichage, et
le second capteur (3a) est configuré pour acquérir des informations de la cible d'authentification avant que la cible d'authentification ne vienne en contact avec l'affichage (2).

10. Dispositif électronique (1) selon la revendication 9, dans lequel
le second capteur (3a) comporte une mémoire (105) pour chaque pixel et est configuré pour fonctionner en tant qu'obturateur global, et/ou dans lequel
le second capteur (3a) comporte un pixel piloté par événement.

11. Dispositif électronique (1) selon la revendication 9 ou 10, dans lequel
le second capteur (3a) est configuré pour acquérir les informations d'authentification dans un cas où une distance allant de l'affichage (2) à la cible d'authentification est plus longue que 0 millimètre et égale à, ou plus courte que, 50 millimètres.
